# EUROPEAN PATENT APPLICATION

(11) **EP 1 724 246 A1**
(43) Date of publication of application: **22.11.2006**
(21) Application number: 05425339.8
(22) Date of filing: 18.05.2005
(51) Int. Cl.: C04B 40/00, C04B 20/10

(54) **Auxiliary substance for cement-based materials and the like**

(71) Applicant: I.C.R.S. Industrial Ceramic Reinforcement Solution S.r.L., 20122 Milano (IT)
(72) Inventor: Giuliani, Giacinto, 16035 Rapallo (Genova) (IT)
(74) Representative: Lunati, Vittoriano

(57) **Abstract**

An auxiliary substance (1) for cement-based materials (3) and the like, of the type including an admixture (2) suitable for selectively incrementing a property of the cement-based material (3), said auxiliary substance (1) comprising a vehicle (4) for distributing the admixture (2) in the cement-based material (3) that includes glass microgranules (5) in dimensions coming between 10 µm and 150 µm and in w/w quantities coming between 20% and 50% of the admixture (2), the auxiliary substance (1) also containing at least one liquid component (6).

## Description

The present invention relates to an auxiliary substance for cement-based materials of the type containing an admixture for selectively incrementing the properties of the cement-based material, as explained in the preamble of the first claim.

It is common knowledge that there are various kinds of admixture for cements, microcements, slurries, concretes, various cement-based mixtures and like materials.

Said admixtures react chemically and/or physically with the cement substances with which they are mixed, giving specific properties to the resulting mixture.

They may be used for purposes such as set accelerating, plasticizing or thinning, air-entraining (to create small air bubbles in the cement), water resistance (for use in waterproofing surfaces), thickening, and so on.

Admixtures for cement-based and similar materials can be added to the cement during its preparation or preferably at the time of its use at the building site.

In fact, it as at the building site that the solid and liquid components of the cement-based material are usually mixed together. These components form a fluid that, exposed to air, begins to set in 1-2 hours and takes 28 days to reach 70-90% of its final strength, which is ultimately achieved in 6-12 months.

Admixtures have different ingredients, but are usually developed on various types of polymer base (polycarboxylate ester, synthetic copolymers, acrylic polymers, etc) to which various other components are added.

They generally come in liquid form and must be added to the cement mixture in precisely specified weight to weight quantities.

The admixture is added at the building site after mixing the dry cement with water and any aggregate and other components.

When the admixture is combined with the fluid cement mixture, it may be necessary to add more water and then unloading the cement-based or like material into formwork, where the mixture sets to produce the required end product.

The average time elapsing from when the admixtures are incorporated to when the mixture is unloaded is 30 to 40 seconds, during which time the admixture must become evenly distributed through the mass of cement mixture and, if necessary, react chemically with said mixture.

It is common, however, for admixtures that are added at the building site not to be uniformly distributed in the cement mixture.

This drawback can give rise to concrete and like end products with mechanical or physical characteristics that are not homogeneous and, particularly important, they may contain parts with lower than the minimum allowable ultimate strengths.

Another drawback consists in the fact that such admixtures do not always have the time to react chemically with the components in the cement-based or like material because the cement begins to set before the chemical reaction process is complete.

This latter drawback particularly affects microcements (i.e. ultra fine cements composed of particles with dimensions coming between 10 and 15 µm) used in injection applications. In fact, these materials are required to have a very rapid setting time, which is often incompatible with the time it takes for the admixtures to spread through and react chemically with the mixture.

Injected cement-based materials are used to repair damage occurring in cement-based products, injecting the material into any discontinuities and cracks. They are particularly important in the repair of road tunnels.

An insufficiently homogeneous dispersion of the admixtures in the cement-based materials may also be due to error or negligence at the building site.

In fact, admixtures may be added to the cement mixture in the wrong quantities, or the required quantity may not be correctly and accurately calculated.

Given this situation, the technical aim behind the present invention is to design an auxiliary substance for use in cement-based materials that is capable of substantially overcoming the above-mentioned drawbacks.

In the context of said technical aim, an important object of the invention is to produce an auxiliary substance for use in cement-based and like materials capable of becoming homogeneously dispersed in the material with which it is mixed.

Another important object of the invention is to produce an auxiliary substance that also reacts very rapidly with the material to which it is added, and particularly with cement-based materials for use in injections, e.g. microcement for injected applications.

Another, not necessarily last, object of the invention is to produce an auxiliary substance that can tolerate any error or negligence in the addition of admixtures to the fluid cement mixture at the building site, i.e. that can be added to the cement-based or like materials in a wide range of proportions.

The specified technical aim and objects are achieved by a liquid for adding to cements, concretes and the like, as claimed in the attached Claim 1.

Preferred embodiments are described in the dependent claims.

Further characteristics and advantages of the invention are better explained below in the detailed description of a preferred embodiment of the invention, with reference to the attached drawings, wherein:
**Fig. 1** is a block diagram illustrating the components of the auxiliary substance according to the invention;
**Fig. 2** schematically illustrates the action of the auxiliary substance in a microcement for use in injections; and
**Fig. 3** shows a component of the auxiliary substance according to the invention.

With reference to the above-mentioned figures, the auxiliary substance according to the invention is globally indicated by the numeral **1.**

It is designed to be added to a cement mixture **3a** in a fluid state, and it includes an admixture **2** of known type.

In its fluid state, the cement mixture 3a contains cement, water, any stone aggregate or the like, any reinforcement fibers, and so on.

After it has been left to dry in air inside suitable formwork, said cement mixture 3a solidifies to form a solidified cement-based or like material **3b,** commonly called concrete if it contains aggregate or similar materials.

The solidified cement-based material 3b, and the cement mixture 3a are consequently the same cement-based material **3** in two different states.

The admixture 2 is suitable for selectively incrementing one or more properties of the solidified cement-based material 3b, or of the cement mixture 3a, such as: mechanical strength, density, water resistance, setting rate, fluidity and plasticity of the mixture 3a, density, and so on.

Said admixture is added to the cement mixture 3a in specified quantities, which generally come between 4% and 8%.

The auxiliary substance 1 also contains a vehicle **4** for distributing the admixture in the cement-based material 3.

Said vehicle 4 is suitable for distributing and dispersing said admixture 2 evenly and rapidly in the cement-based material 3.

It is original in that it includes glass microgranules **5** with dimensions coming between 10 µm and 150 µm in w/w quantities coming between 20% and 50% of the admixture 2.

Moreover, the auxiliary substance 1 comprises at least one liquid component **6,** which substantially gives said substance 1 the consistency of a liquid.

The glass microgranules 5 are advantageously made of alkali-resistant glass (AR) or electric glass (E).

The letter "E" is used to indicate a glass with excellent qualities in terms of strength, a high elastic modulus, and a high melting point. It can be defined as a calcium and aluminium borosilicate, with a low alkaline content.

The letters "AR", on the other hand, indicate a glass with the additional feature of a high content of zirconium oxide ZrO₂ and an excellent capacity to resist acid and alkaline attack, from cement in particular.

The glass microgranules 5 are preferably made by means of a lengthy crushing process in a ball mill, which gives the microgranules 5 a very rounded shape and extremely small dimensions. Experiments conducted by the applicant have demonstrated that such glass microgranules 5 can carry a considerable quantity of admixture 2.

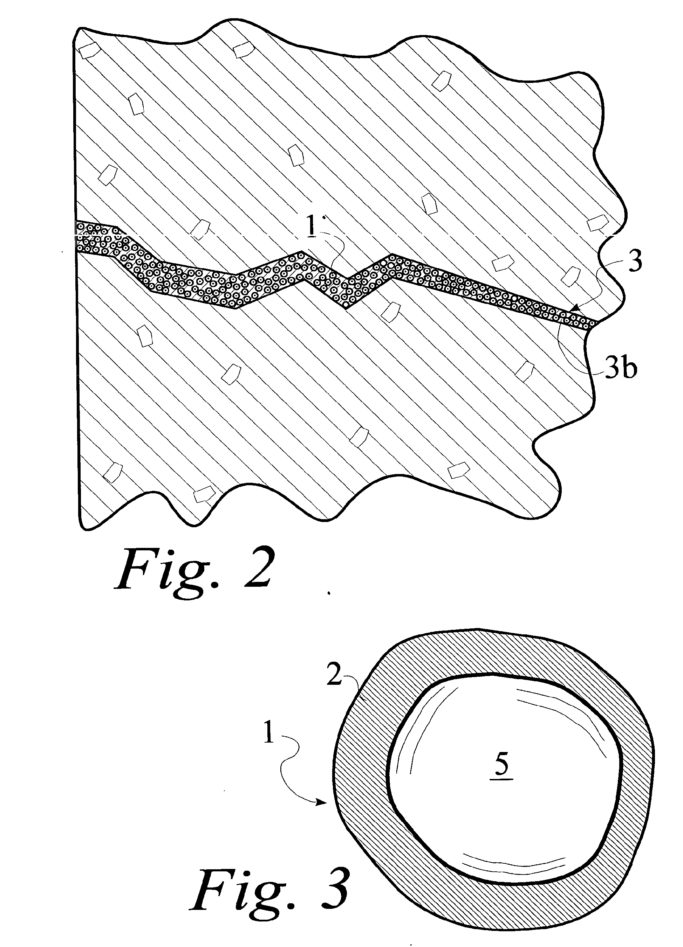

In fact, as illustrated in Fig. 3, the admixtures form a film that surrounds the glass microgranules 5.

Given their particularly rounded shape, the microgranules 5 are remarkably mobile within the cement mixture 3a and consequently spread rapidly and evenly through said cement mixture 3a.

As they move, the glass microgranules 5 carry the admixtures 2 surrounding them.

The glass microgranules 5 are always suitably associated with a fluid 7, preferably consisting of water or an aqueous solution.

Said fluid 7 is part of the vehicle 4, while the liquid component 6 is part of the auxiliary substance 1.

As already mentioned, the vehicle 4 is a component of the auxiliary substance 1, so the fluid 7 is added to the liquid component 6.

The combination of the fluid 7 with the microgranules 5 is necessary if the vehicle 4 is initially separate from the auxiliary substance 1.

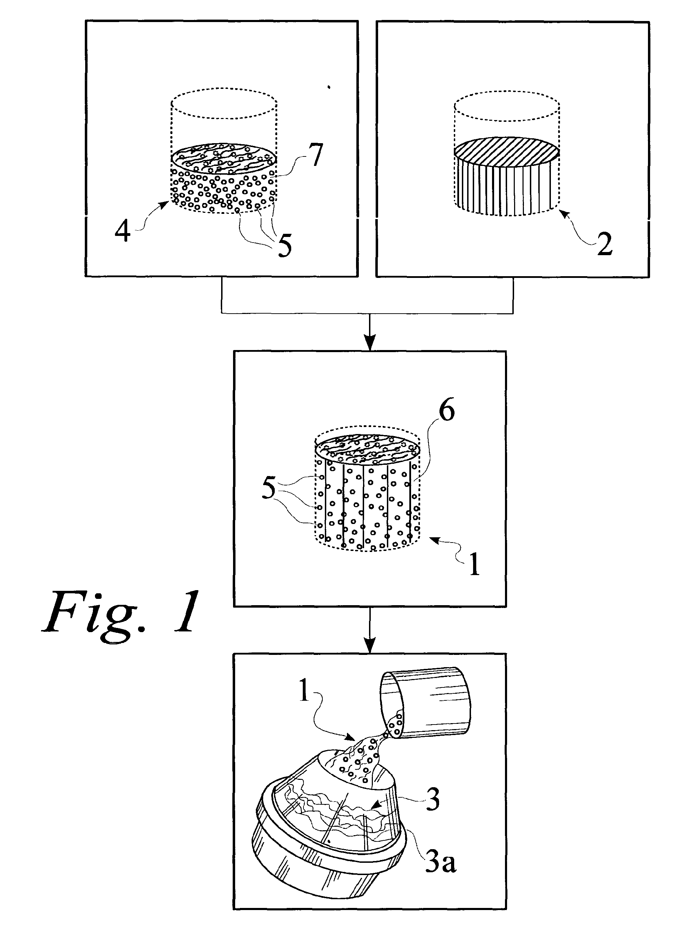

In fact, the vehicle 4 is preferably prepared separately from the admixtures 2 and then mixed with the admixtures 2 to create the auxiliary substance 1, as illustrated in the block diagram in Fig. 1.

The glass microgranules 5 are consequently in a solid suspension in the fluid 7.

The presence of the fluid 7 prevents the glass microgranules 5 from forming lumps, since any such clumping of the microgranules 5 would reduce their global carrier effect.

The w/w quantity of the fluid 7 with respect to the glass microgranules 5 is highly variable, depending on the diameter of the granules ― because a smaller diameter of the microgranules 5 gives rise to a larger surface area for the same weight.

So, for diameters of approximately 10 µm, the required w/w quantity of fluid 7 corresponds to approximately four times the quantity of glass microgranules 5; for diameters around 50 µm, roughly the same w/w quantity of fluid 7 and glass microgranules 5 is required; a diameter of approximately 100 µm requires a w/w quantity of fluid 7 amounting to about one third of the glass microgranules 5.

To facilitate a uniform suspension of the glass microgranules 5 in the fluid 7, the vehicle preferably includes bentonite in w/w quantities of less than 2% of the admixture 2, or preferably in quantities near 1%.

It is common knowledge, in fact, that bentonite is a natural mixture consisting essentially of clayey minerals that has the property of swelling considerably by absorbing liquids and becoming dispersed in said liquids, creating very stable suspensions and supporting any other elements in suspension, such as the glass microgranules 5 in this case.

The auxiliary substance 1 can be delivered to the contractor using the cement-based materials 3, already assembled in the liquid state and already containing the right quantities of admixtures 2 and vehicle 4.

Alternatively, the vehicle 4 can be delivered separately from the admixtures 2, in which case the correct use of the same involves mixing said admixtures 2 and vehicle 4 at the building site to create the auxiliary substance 1.

In both cases, to facilitate their transportation, concentrated substances can be delivered for subsequently dilution simply by adding water at the building site.

A possible, suitable solution involves the admixture 2 and vehicle 4 being added in solution or solid suspension to the tanks at the building site used for storing the fluids, substantially composed of water, needed in the right quantities to hydrate the cement mixture 3a.

In this case, the auxiliary substance 1 will be in w/w quantities coming between 6% and 60% of the water-based fluid needed to hydrate the cement mixture 3a.

The invention proposes a novel use for glass microgranules 5 in dimensions coming between 10 µm and 150 µm, preferably made of AR or E glass of the type previously described.

Said glass microgranules 5 can be used as a vehicle for admixtures 2 for use in cement-based materials 3.

A preferred use involves said glass microgranules 5 being used in admixtures for the microcements used in injection applications.

Said glass microgranules 5 enable the dispersion of the admixture in the cement-based material 3, as explained above.

Glass was hitherto used in cement-based materials 3 only as a form of aggregate, that is to say for purposes and in situations other than those described herein.

The present invention involves a process for the production of an auxiliary substance 1 for use in cement-based materials 3.

Said process includes a stage for creating a solid suspension of glass microgranules 5, as previously described, in a water-based fluid.

Said suspension is obtained by wet crushing pieces of glass to obtain glass microgranules 5.

Said pieces of glass may derive from recycling or the like, or they may be made specifically for said purpose; either way, they are preferably made of AR or E type glass, as described previously.

A small percentage (approximately 1 %) of bentonite is preferably added to the solid suspension, as previously mentioned, since this ensures a stable suspension.

The glass is crushed in ball mills of known type.

Said mills consist of a revolving drum containing a quantity of metal balls, preferably coated with aluminium oxide, which crush the material contained in the drum by means of a continuously repeated impact. These mills are capable of producing very fine crushed material and high comminution ratios.

The glass is crushed for a variable amount of time, depending on the required dimension of the glass microgranules 5. To obtain microgranules in dimensions of approximately 10 µm demands a crushing time of approximately 18 hours in a ball mill loaded with 10,000 kilos of solid suspension.

The granule production stage is followed by a stage in which the solid suspension containing the glass microgranules 5 is screened.

Said screening stage enables the selection of a suitable particle size distribution, i.e. of a suitable dimension for the glass microgranules 5, which is always between 10 µm and 150 µm.

The solid suspension containing the microgranules 5 is then deferrized in a subsequent deferrization stage to eliminate the traces of metal occurring in the water-based fluid, using known processes.

Then comes a stage for selecting the w/w ratio of water-based fluid to glass microgranules 5.

The solid suspension containing the glass microgranules 5 is thus partially drained or further hydrated.

The outcome of this last stage is the production of the previously-described vehicle 4, comprising a fluid 7 in sufficient quantity according to the dimensions of the glass microgranules 5, as explained above.

Finally, the auxiliary substance 1 is obtained from a stage involving mixing the solid suspension with an admixture 2 of known type.

The invention offers important advantages.

In fact, the auxiliary substance 1 enables an even distribution of the known admixtures 2 in the cement-based material 3 by means of the above-described vehicular process.

A homogeneous dispersion of the admixtures 2 ensures that the properties of the end product are also uniform.

Moreover, the presence of the admixtures 2 in a thin film surrounding the very large global surface area of the glass microgranules 5 (approximately 1350 mm² per gram of glass microgranules 5) ensures that any chemical reactions between the admixtures 2 and the components in the cement-based material 3 take place over a very large area.

Said reactions are consequently considerably accelerated and can be completed before the cement mixture 3a begins to set, even if very quick-setting materials are required, as in the case of microcement for use in injections.

Finally, the homogeneous distribution of the admixtures 2 enables even small quantities of said admixtures to spread throughout the cement mixture 3a to which they are added.

This feature means that the cement material 3 is guaranteed to have good properties even if less than the necessary quantity of auxiliary substance 1 is erroneously added.

This characteristic of the auxiliary substance 1 can consequently at least partially compensate for many potential errors.

If the auxiliary substance 1 is added to the tank where the water-based liquid needed to hydrate the cement-based material 3 is stored, then errors in this stage are completely avoided in that the operator never needs to add the auxiliary substance 1 to the cement mixture 3a because it is already contained in the liquid used to hydrate the cement mixture 3a.

A further advantage stems from the fact that, though said glass microgranules 5 are used to distribute the admixtures 2, they also act as aggregate in the cement-based material 3.

They consequently offer considerable advantages as a result of their great strength and particularly smooth and rounded shape, thanks to the process used in their manufacture, as described previously.

In particular, they make the cement mixture 3a more fluid, which means that a smaller quantity of water is needed to make the mixture fluid, giving the cement a greater mechanical strength.

## Claims

1. Auxiliary substance for a cement-based material, of the type containing an admixture (2) suitable for selectively incrementing the properties of the cement-based material (3), **characterized in that** it comprises a vehicle (4) for distributing said admixture throughout said cement-based material (3), said vehicle (4) including glass microgranules (5) in dimensions coming between 10 µm and 150 µm and in w/w quantities coming between 20% and 50% of said admixture (2), said auxiliary substance (1) also containing at least one liquid component (6).

2. Substance according to claim 1, wherein said microgranules (5) are selected between alkali-resistant glass and electric glass.

3. Substance as in claim 1, wherein said glass microgranules (5) have a rounded shape.

4. Substance as in claim 1, wherein said vehicle (4) includes bentonite in w/w quantities less than 2% of said admixture.

5. Substance as in claim 1, wherein said cement-based material (3) consists of a microcement for use in injections.

6. Water-based fluid for hydrating a cement mixture (3a), **characterized in that** it contains an admixture (2) suitable for selectively incrementing the properties of the cement-based material (3) and a vehicle (4) for distributing said admixture in said cement mixture (3) including glass microgranules (5) in dimensions coming between 10 µm and 150 µm, in w/w quantities coming between 20% and 50% of said admixture (2), said admixture (2) being in w/w quantities coming between 5% and 30% of said water-based liquid.

7. Use of glass microgranules in dimensions coming between 10 µm and 150 µm as a vehicle for distributing admixtures (2), for use in cement-based materials (3) to improve the dispersion of said admixtures (2).

8. Use of glass microgranules as in claim 7, in microcements for use in injections.

9. Process for the production of an auxiliary substance for use in cement-based materials, **characterized in that** it comprises: a stage for preparing a solid suspension of glass microgranules (5) in a water-based fluid, obtained by wet crushing pieces of glass in a ball mill, a stage for screening said solid suspension in order to select said glass microgranules (5) in dimensions coming between 10 µm and 150 µm, a stage for adjusting the w/w proportions of said water-based fluid and said glass microgranules (5), a stage for combining said solid suspension with an admixture (2) suitable for selectively incrementing the properties of the cement-based material (3).

10. Process as in claim 9, including a stage for the deferrization of said solid suspension after said screening stage and before said selection stage.
